# EUROPÄISCHE PATENTSCHRIFT

(11) **EP 4 079 572 B1**
(45) Veröffentlichungstag und Bekanntmachung des Hinweises auf die Patenterteilung: **10.07.2024**
(21) Anmeldenummer: 22165935.2
(22) Anmeldetag: 31.03.2022
(51) Int. Cl.: B60P 1/04

(54) **DUMPER**
DUMPER
TOMBEREAU

(30) Priorität: 20.04.2021 AT 5007221 U
(43) Veröffentlichungstag der Anmeldung: 26.10.2022
(73) Patentinhaber: Wacker Neuson Linz GmbH, 4063 Hörsching (AT)
(72) Erfinder: Mittermayr, Thomas, 4101 Feldkirchen an der Donau (AT); Beranek, Jan, 4063 Hörsching (AT); Peterseil, Johannes, 4312 Katsdorf (AT)
(74) Vertreter: Hübscher & Partner Patentanwälte GmbH

(56) Entgegenhaltungen:
- EP-A1- 2 148 794
- CN-A- 109 367 462
- DE-A1- 102013 102 790
- DE-A1- 102016 106 459
- DE-U1- 202016 100 964
- US-A1- 2014 336 883

## Beschreibung

Die Erfindung bezieht sich auf einen Dumper mit einem Fahrgestell, umfassend eine darauf kippverstellbar gelagerte Mulde, einen Fahrantrieb und eine elektrische Steuereinrichtung, der Sensoren zur Fahrzustandserkennung zugeordnet sind, wobei die Steuereinrichtung in Abhängigkeit der Muldenstellung und des Fahrzustandes, zwecks Einhaltung eines Sicherheitsabstandes zur Kippgrenze, bei Überschreiten wenigstens eines in der Steuereinrichtung hinterlegten fahrzeugspezifischen, dem Sicherheitsabstand entsprechenden Grenzwertes ein Gefahrensignal absetzt. Gattungesgemäße Vorrichtungen sind beispielsweise aus EP 1 148 794 A1, DE10 2013 102790 A1, CN 109 367 462 A und US 2014/336883 A1 bekannt. Als Dumper, oder auch Vorderkipper, die eine kompaktere Bauart eines Muldenkippers bezeichnen, werden in der Regel geländegängige Baustellenfahrzeuge mit einer kippbaren Mulde bezeichnet, die einer Beförderung von Baumaterial und Aushub dienen. Dumper können beim Auskippen ab einem gewissen Neigungswinkel, der sogenannten Kippgrenze, die Haftung zum Boden verlieren und sich in weiterer Folge gegebenenfalls sogar überschlagen. Aktuell gibt es keine technische Einrichtung, die es hilft einen Überschlag zu vermeiden und die den Bediener darauf hinweist, dass sich die Maschine in einer kritischen Lage befindet. Ferner sind aus der DE 102016106459 A1 Arbeitsfahrzeuge mit Knick-Gelenk-Lenkung sowie einer kippverstellbaren Mulde am Vorderwagen bekannt.

Einfache Dumper sind mit einem Frontantrieb ausgestattet. Neuere oder größere meist mit Allradantrieb. Auch Ausführungen mit Raupenantrieb sind verfügbar, insbesondere für den Einsatz im Gartenbau oder bei schwierigem Untergrund. Dumper verfügen teilweise auch über eine optionale Drehkippmulde, wodurch sich das Schüttgut besser platzieren lässt, bzw. anhebbare Mulden, um das Schüttgut von einer erhöhten Position abgeben zu können. Zudem sind Modelle mit umsetzbarem Fahrerstand bekannt, womit der Dumper in beiden Fahrtrichtungen gleichermaßen mit in Fahrtrichtung gewandter Sitzposition des Fahrers bewegt werden können.

Der Erfindung liegt somit die Aufgabe zugrunde, einen Dumper zu schaffen, der eine erhöhte Sicherheit gegen Überschläge aufweist.

Die Erfindung löst die gestellte Aufgabe dadurch, dass die Steuereinrichtung in Abhängigkeit der Muldenstellung und des Fahrzustandes, zwecks Einhaltung eines Sicherheitsabstandes zur Kippgrenze, bei Überschreiten wenigstens eines in der Steuereinrichtung hinterlegten fahrzeugspezifischen, dem Sicherheitsabstand entsprechenden Grenzwertes ein Gefahrensignal absetzt, wobei die Mulde über eine Dreheinrichtung, nämlich einen Drehschemel, bezüglich des Fahrgestells um eine Hochachse drehverstellbar ausgebildet und der Dreheinrichtung vorzugsweise ein Drehwinkelsensor zugeordnet ist.

Bei einem Dumper mit einem derartigen sogenannten Hochdrehkipper kann die Mulde angehoben werden, wodurch sich der kritische Winkel der Maschine verringert, also die Kippgrenze bei geringeren Winkeln erreicht wird. Daher wird bei angehobener Mulde insbesondere ein anderer Grenzwert für den erlaubten Neigungswinkel verwendet als bei abgesenkter Mulde. Der erlaubte Neigungswinkel wird in Abhängigkeit der Muldenstellung vorgegeben.

Mithilfe der erfindungsgemäßen Steuereinrichtung kann ein Bediener beim Auskippen der Mulde vor kritischen Auskippwinkeln gewarnt werden. Gegebenenfalls kann die Kippverstellung der Mulde auch vom jeweils anliegenden Gefahrensignal unterdrückt werden, um ein Überschreiten der Kippgrenze zu vermeiden. Im einfachsten Fall sind in der Steuereinrichtung für mögliche Fahrzustände, insbesondere Fahrgeschwindigkeit, Neigung des Fahrgestelles, Lenkwinkel, Beschleunigen, Verzögern u. dgl. jeweils dem Sicherheitsabstand zur Kippgrenze entsprechende Grenzwerte hinterlegt. Wird ein Grenzwert überschritten, wird ein Gefahrensignal abgesetzt. Die Lage der Mulde kann mittels Endschalter oder vorzugsweise mittels eines Kippwinkelsensors gemessen werden. Die Kippgrenze ist von Bauart und Baugröße, insbesondere Radstand, Spurweite und Schwerpunkt des Dumpers abhängig.

Zur Feststellung des Fahrzustandes kann, vorzugsweise am der Mulde zugeordneten Fahrgestellabschnitt des Dumpers, wenigstes ein Neigungssensor vorgesehen sein, der die Fahrgestellneigung um die Wankachse, eine Fahrzeugquerachse, und/oder die Nickachse, eine Fahrzeuglängsachse, misst. Der Neigungssensor kann am der Mulde zugeordneten Fahrgestellabschnitt des Dumpers, insbesondere dem Vorderwagen, montiert sein, und misst die jeweilige Schräglage der Baumaschine analog oder diskret. Je nach eingestelltem zulässigen Neigungswinkel wird das dem Sicherheitsabstand zum Grenzwert entsprechende Gefahrensignal abgesetzt. Mit der Erfindung kann ein Bediener auf kritische Fahrzustände des Dumpers hingewiesen werden und besteht die Möglichkeit gefährliche Fahrzustände weitestgehend zu vermeiden.

Darüber hinaus kann zur Feststellung des Fahrzustandes wenigstens ein Fahrgeschwindigkeitssensor vorgesehen sein. Nach einer einstellbaren Entprellung der Sensoren kann die Fahrgeschwindigkeit bei aktiver, mit dem Neigungssensor gemessener, Schräglage beschränkt werden, um zu verhindern, dass die maximale Fahrgeschwindigkeit den Bediener bei zu großer Schräglage gefährdet. Dabei wird die Geschwindigkeitsreduzierung vom der Bauartgeschwindigkeit entsprechenden Geschwindigkeitsmaximum bis zum eingestellten Geschwindigkeitswert linear oder stufenweise reduziert.

Ebenso kann zur Feststellung des Fahrzustandes wenigstens ein Lenkwinkelsensor vorgesehen sein. Derartige Fahrzeuge können mit herkömmlichen oder Knicklenkungen ausgestattet sein, die besonders kippanfällig sind.

Sind zur Feststellung des Fahrzustandes an Vorderachse und an Hinterachse des Fahrwerkes Wägesensoren angeordnet, so kann die Lastverteilung, insbesondere auch der Ladung, für die Gefahrenabschätzung berücksichtigt werden. Dehnmesstreifen eignen sich zur Nutzung als Wägesensoren, da die von den Dehnmesstreifen aufgenommene Dehnung als Maß für die Belastung einer Achse od. dgl. dient und so auf deren Gewichtsbelastung geschlossen werden kann. Dazu können zwei Dehnungsmessstreifen, je einer auf der Vorder- und einer Hinterachse, vorgesehen sein, welche auf einer plangefrästen Fläche der jeweiligen Achse befestigt werden und die eine Be- und Entlastung der der Achsen überwachen. Geht beispielsweise die Gewichtsbelastung durch den Dumper an einer Achse gegen Null, so steigt die Kippgefahr erheblich. Es können auch vier, oder mehr, Dehnmessstreifen vorgesehen sein. Sind zwei Dehnmessstreifen je Achse, beispielsweise jeweils ein Dehnmesstreifen auf jeder Seite der Achse, vorgesehen, so können auch die Werte der beiden Dehnmesstreifen einer Achse verglichen und kann auf eine seitliche Neigung der Maschine geschlossen werden.

Zur Feststellung der Muldenstellung kann wenigstens ein Lagesensor, der im einfachsten Fall ein Lageschalter ist, vorgesehen sein. Zum Anheben der Mulde kann die Mulde über eine Hubeinrichtung, insbesondere einen Scherentrieb, bezüglich des Fahrgestells hubverstellbar ausgebildet und kann der Hubeinrichtung vorzugsweise ein Hubhöhensensor zugeordnet sein. Die Mulde kann unterschiedliche Lagen einnehmen. Beispielsweise Mulde in Ablage, Mulde gekippt, Mulde angehoben aber nicht gekippt und Mulde angehoben und gekippt. Eine angehobene Mulde erhöht den Schwerpunkt des Dumpers merklich und damit auch die Kippgefahr.

Zur Darstellung des Gefahrensignales kann eine Anzeige im Bereich eines Armaturenbrettes des Dumpers und/oder eine akustische Signaleinrichtung vorgesehen sein. Das Display gibt bei einem eingehenden Gefahrensignal ein optisches und/oder akustisches Warnsignal aus.

Vorzugsweise begrenzt und/oder reduziert die Steuereinrichtung die erlaubte Fahrgeschwindigkeit des Fahrantriebs auf eine in der Steuereinrichtung hinterlegte, gefahrensignalabhängige Höchstfahrgeschwindigkeit. Bei zu großer Schräglage soll die Geschwindigkeit reduziert werden, da der Dumper bei zu hohen Geschwindigkeiten, insbesondere in unebenem Gelände, wie auf einer Baustelle, leichter die Bodenhaftung verlieren und umkippen können. Bei den Hochdrehkipper Maschinen wird bei angehobener Mulde die Neigungsüberwachung permanent aktiv und hat einen noch kritischeren eingestellten Winkel sowie eine permanente Geschwindigkeitsreduzierung.

Wird die Neigung des Fahrgestelles beispielsweise mittels Neigungssensor gemessen und dabei festgestellt, dass sich der Dumper beim Auskippen in kritischer Schräglage befindet, wird ein akustisches und/oder optisches Warnsignal ausgegeben. Zudem können für unterschiedliche Fahrzustände unterschiedliche Grenzwerte und Gefahrensignale vorgesehen sein. Zum Beispiel erfolgt bei Gefahrenniveau 1 keine Warnung und Einschränkung, bei Gefahrenniveau 2 eine geringe Reaktion, bei Gefahrenniveau 3 eine mittlere Reaktion und bei Gefahrenniveau 4 die höchste Reaktion.

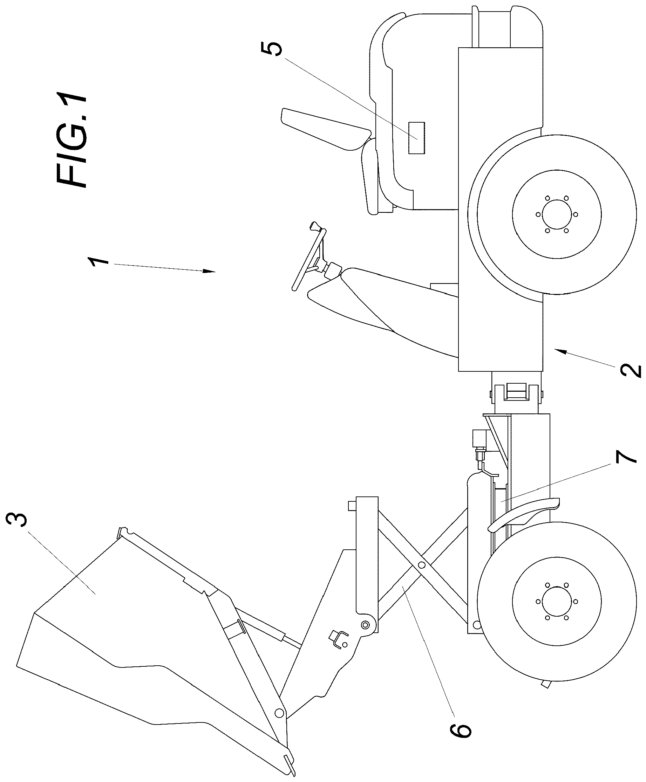

In der Zeichnung ist der Erfindungsgegenstand beispielsweise dargestellt. Es zeigen
Fig. 1 einen Dumper in Seitenansicht,

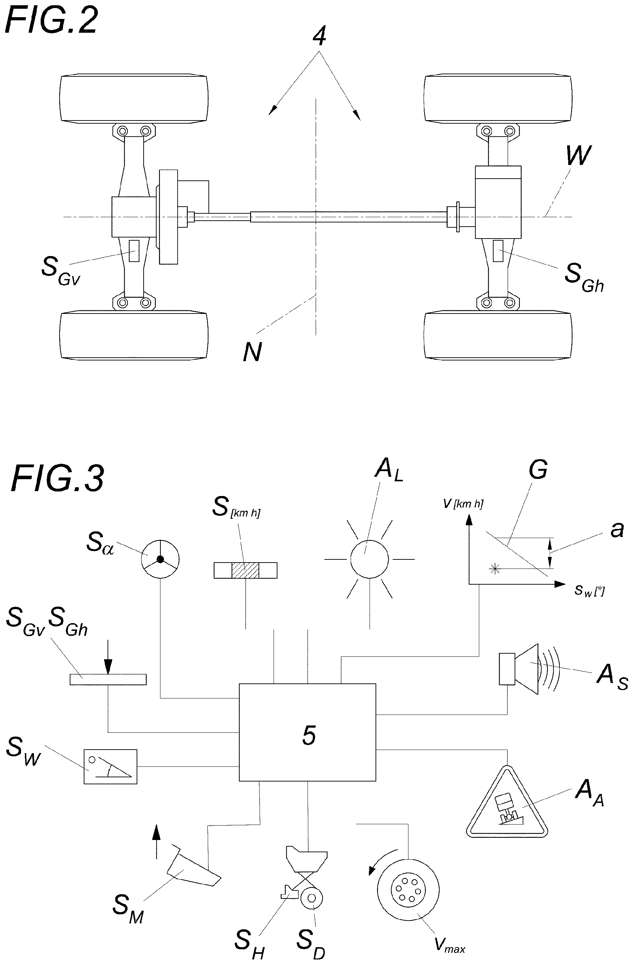

Fig. 2 eine Draufsicht auf einen Fahrantrieb des Dumpers und
Fig. 3 ein Schema einer erfindungsgemäßen Steuereinrichtung.

Ein Dumper 1 mit einem Fahrgestell 2 umfasst eine darauf kippverstellbar gelagerte Mulde 3, einen Fahrantrieb 4 und eine elektrische Steuereinrichtung 5, der Sensoren S zur Fahrzustandserkennung zugeordnet sind. Die Steuereinrichtung 5 setzt in Abhängigkeit der Muldenstellung und des Fahrzustandes, zwecks Einhaltung eines Sicherheitsabstandes zur Kippgrenze, bei Überschreiten wenigstens eines in der Steuereinrichtung 5 hinterlegten fahrzeugspezifischen, dem Sicherheitsabstand entsprechenden Grenzwertes ein Gefahrensignal A ab.

Zur Feststellung des Fahrzustandes ist wenigstens am der Mulde zugeordneten Fahrgestellabschnitt des Dumpers, wenigstes ein Neigungssensor Sw vorgesehen, der die Fahrgestellneigung um die Wankachse W und/oder die Nickachse N misst. Zur Feststellung des Fahrzustandes ist zudem ein Fahrgeschwindigkeitssensor S_{Km/h} vorgesehen. Auch wenigstens ein Lenkwinkelsensor Sₐ ist vorgesehen.

Zur Feststellung des auf jeder Achse aufruhenden Gewichtes sind an Vorderachse und an Hinterachse des Fahrwerkes Wägesensoren S_{Gv}, S_{Gh} angeordnet. Zur Feststellung der Muldenstellung ist wenigstens ein Lagesensor S_{M} vorgesehen. Ist die die Mulde 3 über eine Hubeinrichtung 6, insbesondere einen Scherentrieb, bezüglich des Fahrgestells 2 hubverstellbar ausgebildet, so ist der Hubeinrichtung 6 gegebenenfalls ein Hubhöhensensor S_{H} zugeordnet. Zur Drehverstellung der Mulde 3 ist eine Dreheinrichtung 7, nämlich ein Drehschemel vorgesehen, mit dem die Mulde 3 bezüglich des Fahrgestells 2 um eine Hochachse drehverstellt werden kann. Der Dreheinrichtung ist ein Drehwinkelsensor S_{D} zugeordnet.

Zur Darstellung des Gefahrensignales A ist eine Anzeige A_{A}, A_{L} im Bereich eines Armaturenbrettes des Dumpers und/oder eine akustische Signaleinrichtung As vorgesehen. Die Steuereinrichtung 5 begrenzt die erlaubte Fahrgeschwindigkeit v des Fahrantriebs 4 auf eine in der Steuereinrichtung 5 hinterlegte, gefahrensignalabhängige Höchstfahrgeschwindigkeit vₘₐₓ.

## Patentansprüche

1. Dumper (2) mit einem Fahrgestell (2), umfassend eine darauf kippverstellbar gelagerte Mulde (3), einen Fahrantrieb (4) und eine elektrische Steuereinrichtung (5), der Sensoren (S) zur Fahrzustandserkennung zugeordnet sind, **dadurch gekennzeichnet, dass** die Steuereinrichtung (5) in Abhängigkeit der Muldenstellung und des Fahrzustandes, zwecks Einhaltung eines Sicherheitsabstandes (a) zur Kippgrenze, bei Überschreiten wenigstens eines in der Steuereinrichtung hinterlegten fahrzeugspezifischen, dem Sicherheitsabstand entsprechenden Grenzwertes(G) ein Gefahrensignal (A) absetzt, wobei dass die Mulde (3) über eine Dreheinrichtung (7), nämlich einen Drehschemel, bezüglich des Fahrgestells (2) um eine Hochachse drehverstellbar ausgebildet und der Dreheinrichtung (7) vorzugsweise ein Drehwinkelsensor (S_{D}) zugeordnet ist.

2. Dumper nach Anspruch 1, **dadurch gekennzeichnet, dass** zur Feststellung des Fahrzustandes, vorzugsweise am der Mulde (3) zugeordneten Fahrgestellabschnitt des Dumpers (1), wenigstes ein Neigungssensor (Sw) vorgesehen ist, der die Fahrgestellneigung um die Wankachse (W) und/oder die Nickachse (N) misst.

3. Dumper nach Anspruch 1 oder 2, **dadurch gekennzeichnet, dass** zur Feststellung des Fahrzustandes wenigstens Fahrgeschwindigkeitssensor (S_{Km/h}) vorgesehen ist.

4. Dumper nach einem der Ansprüche 1 bis 3, **dadurch gekennzeichnet, dass** zur Feststellung des Fahrzustandes wenigstens ein Lenkwinkelsensor (Sₐ) vorgesehen ist.

5. Dumper nach einem der Ansprüche 1 bis 4, **dadurch gekennzeichnet, dass** zur Feststellung des Fahrzustandes an Vorderachse und an Hinterachse des Fahrwerkes Wägesensoren (S_{Gv}, S_{Gh}) angeordnet sind.

6. Dumper nach einem der Ansprüche 1 bis 5, **dadurch gekennzeichnet, dass** zur Feststellung der Muldenstellung wenigstens ein Lagesensor (S_{M}) vorgesehen ist.

7. Dumper nach einem der Ansprüche 1 bis 6, **dadurch gekennzeichnet, dass** die Mulde (3) über eine Hubeinrichtung (6), insbesondere einen Scherentrieb, bezüglich des Fahrgestells (2) hubverstellbar ausgebildet und der Hubeinrichtung (6) vorzugsweise ein Hubhöhensensor (S_{H}) zugeordnet ist.

8. Dumper nach einem der Ansprüche 1 bis 7, **dadurch gekennzeichnet, dass** zur Darstellung des Gefahrensignales eine Anzeige (A_{A}) im Bereich eines Armaturenbrettes des Dumpers (1) und/oder eine akustische Signaleinrichtung (As) vorgesehen ist.

9. Dumper nach einem der Ansprüche 1 bis 8, **dadurch gekennzeichnet, dass** die Steuereinrichtung (5) die erlaubte Fahrgeschwindigkeit (v) des Fahrantriebs (4) auf eine in der Steuereinrichtung (5) hinterlegte, gefahrensignalabhängige Höchstfahrgeschwindigkeit (vₘₐₓ) begrenzt und/oder reduziert.

## Claims

1. Dumper (2) with a chassis (2), comprising a trough (3) mounted thereon in a tilt-adjustable manner, a travel drive (4) and an electrical control device (5), to which sensors (S) for detecting the driving state are assigned, **characterized in that** the control device (5), as a function of the trough position and the travel state, emits a danger signal (A) for the purpose of maintaining a safety distance (a) from the tip-over limit, when at least one vehicle-specific limit value (G) corresponding to the safety distance (a) stored in the control device is exceeded, wherein the trough (3) is designed to be rotationally adjustable about a vertical axis with respect to the chassis (2) by means of a rotating device (7), namely a turntable, and a rotation angle sensor (S_{D} ) is preferably assigned to the rotating device (7).

2. Dumper according to claim 1, **characterized in that** at least one inclination sensor (Sw), which measures the inclination of the chassis (2) about the roll axis (W) and/or the pitch axis (N), is provided to determine the driving state, preferably on the chassis section of the dumper (1) assigned to the trough (3).

3. Dumper according to claim 1 or 2, **characterized in that** at least one driving speed sensor (S_{Km/h}) is provided to determine the driving state.

4. Dumper according to one of claims 1 to 3, **characterized in that** at least one steering angle sensor (S*_{α}*) is provided to determine the driving state.

5. Dumper according to one of claims 1 to 4, **characterized in that** weighing sensors (S_{Gv}, S_{Gh}) are arranged on the front axle and on the rear axle of the chassis to determine the driving state.

6. Dumper according to one of claims 1 to 5, **characterized in that** at least one position sensor (S_{M}) is provided to determine the trough position.

7. Dumper according to one of claims 1 to 6, **characterized in that** the trough (3) is designed to be lift-adjustable with respect to the chassis (2) via a lifting device (6), in particular a scissor drive, and a lift height sensor (S_{H}) is preferably assigned to the lifting device (6).

8. Dumper according to one of claims 1 to 7, **characterized in that**, in order to present the danger signal (A), a display (A_{A}) in the area of a dashboard of the dumper (1) and/or an acoustic signal device (As) is provided

9. Dumper according to one of claims 1 to 8, **characterized in that** the control device (5) limits and/or reduces the permitted travel speed (v) of the travel drive (4) to a maximum travel speed (vₘₐₓ), which is stored in the control device (5) and dependent on the danger signal (A).

## Revendications

1. Tombereau (2) avec un châssis (2), comprenant une benne (3) montée dessus de façon à pouvoir basculer, un mécanisme de roulement (4) et un dispositif de commande électrique (5) auquel sont associés des capteurs (S) pour détecter l'état de déplacement, **caractérisé en ce que** le dispositif de commande (5) émet un signal de danger (A) en fonction de la position de la benne et de l'état de déplacement, afin de respecter une distance de sécurité (a) par rapport à la limite de basculement en cas de dépassement d'au moins une valeur-limite (G) spécifique au véhicule et correspondant à la distance de sécurité, qui est enregistrée dans le dispositif de commande, la benne (3) étant configurée de façon à pouvoir pivoter autour d'un axe vertical par rapport au châssis (2) par le biais d'un dispositif de rotation (7), à savoir d'un tambour de rotation et un capteur d'angle de rotation (S_{D}) étant de préférence associé au dispositif de rotation (7).

2. Tombereau selon la revendication 1, **caractérisé en ce qu'**au moins un capteur d'inclinaison (Sw) qui mesure l'inclinaison du châssis autour de l'axe de roulis (W) et/ou de l'axe de tangage (N) est prévu, de préférence sur la section de châssis du tombereau (1) associée à la benne (3), pour identifier l'état de déplacement.

3. Tombereau selon la revendication 1 ou 2, **caractérisé en ce qu'**au moins un capteur de vitesse de déplacement (S_{Km/h}) est prévu pour identifier l'état de déplacement.

4. Tombereau selon une des revendications 1 à 3, **caractérisé en ce qu'**au moins un capteur d'angle de braquage (Sₐ) est prévu pour identifier l'état de déplacement.

5. Tombereau selon une des revendications 1 à 4, **caractérisé en ce que** des capteurs de poids (S_{Gv}, S_{Gh}) sont disposés sur l'essieu avant et sur l'essieu arrière du véhicule pour identifier l'état de déplacement.

6. Tombereau selon une des revendications 1 à 5, **caractérisé en ce qu'**au moins un capteur de position (S_{M}) est prévu pour identifier la position de la benne.

7. Tombereau selon une des revendications 1 à 6, **caractérisé en ce que** la benne (3) est configurée de façon réglable en levage par rapport au châssis (2) par le biais d'un dispositif de levage (6), en particulier d'une transmission à ciseaux, et qu'un capteur de hauteur de levage (S_{H}) est de préférence associé au dispositif de levage (6).

8. Tombereau selon une des revendications 1 à 7, **caractérisé en ce qu'**un témoin (A_{A}) est prévu dans la région d'un tableau de bord du tombereau (1) et/ou un dispositif de signalisation est prévu pour présenter le signal de danger.

9. Tombereau selon une des revendications 1 à 8, **caractérisé en ce que** le dispositif de commande (5) limite et/ou réduit la vitesse de déplacement autorisée (v) du mécanisme de roulement (4) à une vitesse de déplacement maximum (vₘₐₓ) enregistrée dans le dispositif de commande (5) en fonction du signal de danger.
